(19) Europäisches Patentamt

European Patent Office

Office européen des brevets

(11) **EP 2 749 608 B1**

(12) **EUROPEAN PATENT SPECIFICATION**

(45) Date of publication and mention of the grant of the patent:
**21.09.2016 Bulletin 2016/38**

(51) Int Cl.:
***C09D 5/00*** *(2006.01)*

(21) Application number: **13199400.6**

(22) Date of filing: **23.12.2013**

(54) **Anti-reflection coatings with self-cleaning properties, substrates including such coatings, and related methods**

Antireflexionsbeschichtungen mit selbstreinigenden Eigenschaften, Substrate mit solchen Beschichtungen und zugehörige Verfahren

Revêtements antireflets ayant des propriétés autonettoyantes, substrats comprenant de tels revêtements et procédés associés

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2012 US 201213727767**

(43) Date of publication of application:
**02.07.2014 Bulletin 2014/27**

(73) Proprietor: **GUARDIAN INDUSTRIES CORP.**
**Auburn Hills, MI 48326-1714 (US)**

(72) Inventors:
• **Liang, Liang**
**Taylor, MI 48180 (US)**
• **Blacker, Richard**
**Farmington Hills, MI 48334 (US)**

(74) Representative: **Hess, Peter K. G.**
**Bardehle Pagenberg Partnerschaft mbB**
**Patentanwälte, Rechtsanwälte**
**Prinzregentenplatz 7**
**81675 München (DE)**

(56) References cited:
**EP-A1- 1 475 414          WO-A1-2010/069997**
**US-A1- 2010 003 498**

**Description**

Certain example embodiments of this invention relate to silica and titania coatings. In certain example embodiments of this invention, such coatings may be used in photovoltaic devices, antifog mirrors, storefront windows, display cases, picture frames, greenhouses, other types of windows, or in any other suitable application.

**Background and summary of Example embodiments**

Antireflective coatings may be useful for photovoltaic devices and other applications in which reflection of electromagnetic radiation is preferably avoided. Titania-based coatings may be used, although they occasionally may suffer from possible disadvantages, such as instability of coating solutions or sols.
Conventional wet chemical methods to produce titania coatings may use sol-gel processes involving hydrolysis and/or condensation reactions of titanium alkoxides. Titania coatings that are formed from these sols are generally fired at elevated temperatures to convert the precursor compounds into titanium dioxide coatings. In many instances, titania sols are aged for several hours after they are prepared in order to ensure thorough hydrolysis of precursor alkoxides.
The stability of titania sols may be affected by several factors, including pH, water content, concentration of solids, etc. Chelating ligands, such as 2,4-pentanedione may be added to titania sols so as to prolong their shelf life.
Producing stable sols in volumes required for mass production may be challenging. While the shelf life of titania sols may be influenced by storage and transportation conditions, the useful pot life during processing may be affected by the loss of volatiles, exposure to humidity (e.g., ambient humidity), etc. During thermal processing of coatings, heating profiles of gradual temperature ramp rates may be employed to promote condensation and cross-linking reactions. Coatings may be fired at high temperatures to burn off organic content and form titanium dioxide coatings.
There may be a need for a method to produce a self-cleaning anti-reflection coating that includes titania and silica. There may also be a need for a method by which titania precursor coatings may be stored and fired on demand to produce titania coatings.
Hydrophilic coatings (e.g., coatings with a low contact angle) may be useful for self-cleaning surfaces as well as in anti-fog and/or anti-mist applications. Antireflective coatings may be useful for photovoltaic devices and other applications in which reflection of electromagnetic radiation is preferably avoided.
Photovoltaic devices such as solar cells (and modules therefor) are known in the art. Glass is an integral part of most common commercial photovoltaic modules, including both crystalline and thin film types. A solar cell/module may include, for example, a photoelectric transfer film made up of one or more layers located between a pair of substrates. One or more of the substrates may be of glass, and the photoelectric transfer film (typically a semiconductor) is for converting solar energy to electricity. Example solar cells are disclosed in U.S. Patent Nos. 4,510,344, 4,806,436, 6,506,622, 5,977,477, and JP 07-122764.
For photovoltaic (PV) applications - that is, in applications involving photovoltaic modules - the reflection of glass is preferably minimized. The power output of the module may be dependant upon the amount of light (e.g., the number of photons) within the solar spectrum that passes through the glass and reaches the PV semiconductor. Therefore, numerous attempts have been made to try to boost overall solar transmission through glass used in PV-modules.
One attempt relates to the use of iron-free or "clear" glass, which may increase the amount of solar light transmission when compared to regular float glass, through absorption minimization. Solar transmission maybe further increased by the use of an antireflective (AR) coating on the first surface of the glass. Porous silica has been used as an AR coating on a glass substrate. But AR coatings derived from porous silica may be difficult to keep clean due to the possible a presence of a large amount of pores in structure.
Therefore, there may be a need to include an antireflective coating that preferably is highly durable and/or self cleaning and/or hydrophilic and maybe used as a PV superstrate or the like.
Many types of anti-reflection (AR) glass and coatings are known. These may include those made by including a thin silica coating layer with a mesoporous structure on a substrate, such as flat or patterned glass. Those AR coated glasses may exhibit the features of tunable reflective index and thickness. But the mesoporous structure in the nanometer range may result in an increase of adsorption of pollutants from an outdoor environment, which in turn may cause an increase of refractive index and loss of transmittance.
Contamination on surface of anti-reflection (AR) glass may significantly diminish the performance of AR coated glass. For instance, the refractive index of SFO AR coated glass may increase from 1.246 to 1.303 within 28 days when AR coated glass is exposed to an outdoor environment. During this period, the transmittance gain of SFO AR coated glass (in terms of Tqe% gain, for example) may decrease from 2.7% to 1.77%. It is believed that almost 34% of Tqe% gain is dropped because of the contamination of AR coated glass.
Aside from the development of a barrier layer on pore surface to reduce contamination buildup, another strategy may be to integrate photo catalyst materials into an optical layer. This may play a role in decomposing organics adhered to surface pores by sunlight activation. Self-cleaning AR coated glass had been developed for this purpose, e.g., using sunlight (or other external source to cause decomposition of materials adsorbed to the surface of an AR coating). Among photocatalysts, titanium dioxide, $TiO_2$ is believed to be suitable for light-based decomposition, e.g., when in its anatase phase.

There may be two photo-induced phenomena created by $TiO_2$: the first is believed to be a photo-catalytic phenomena, which leads to the breakdown of organics; and the second is super-hydrophilicity, which leads to a high wetability.

A challenge of developing AR coated glass with the self-cleaning function by $TiO_2$ may be to keep a high transmittance because the refractive index of $TiO_2$ is generally quite high (sometimes around 2.4 or 2.5), which is higher than that of glass. Thus, the optical performance of AR coated glass may be reduced by a simple coating of a $TiO_2$ thin film layer on the glass's surface. Although the increase of pore size of $TiO_2$ thin layer may effectively reduce the refractive index of coating layer, the thin layer with weaker mechanical strength may reduce life time of AR coated glass.

Many prior efforts relate to either combination of $TiO_2$ and $SiO_2$ in same coating layer or different coating layers. For instance, one AR coated glass with both self-cleaning and super-hydrophilicity was developed by combining nano-particles of $TiO_2$ and $SiO_2$ in one coating layer. The developed self-cleaning AR coated glass may exhibit good durability. In addition a simple spin coating process may be used.

The optical performances of self-cleaning AR coated glass may be evaluated by broadband transmittance, refractive index, and optical thickness. This application relates to an insight that balance between self-cleaning and optical performance may be achieved by adjusting the amount of $TiO_2$ nanoparticles in a coating layer.

Document WO 2010/069997 A1 relates to compositions with self-cleaning properties, and in particular relates to coatings or paints comprising particles coated with a catalytically active composition. The particles are micro-sized, hollow or solid, and comprise one or more materials such as ceramic materials, polymeric materials, creamed materials, metallic materials, pigmented materials, light-absorbing and/or light reflecting materials.

Reference US 2010/0003498 A1 relates to self-decontaminating inorganic coatings containing semiconductor metal oxide nanoparticles. The disclosed coating composition comprises an inorganic binder and the semiconductor metal oxide nanoparticles. It is suggested to provide the coating composition in the form of a water based ceramic slurry consisting of filler material dispersed in a silicate binder.

Document EP 1 475 414 A1 refers to the treatment of hazardous contamination. It is suggested to provide a photo catalytic coating based on titanium dioxide. Further an organic resin or solvent based coating formulation containing titanium dioxide primarily in the anatase form is disclosed.

There is still a need for improving the durability of antireflection coatings with self-cleaning properties.

The present invention provides a solution according to the subject matter of the independent claims.

In certain example embodiments, a method of making a coated article comprising an anti-reflection coating supported by a glass substrate is provided. At least a portion of a solution comprising (i) a metal alkoxide, (ii) a transition metal alkoxide, and (iii) titanium dioxide nanoparticles, is deposited on the glass substrate to form a substantially uniform coating. Said coating is cured and/or allowed to cure, in making the anti-reflection coating.

In certain example embodiments, a coated article comprising an anti-reflection coating supported by a glass substrate is provided. The anti-reflection coating comprising: a reaction product of a hydrolysis or a condensation reaction of a metal alkoxide and a transition metal alkoxide; and a plurality of anatase $TiO_2$ nanoparticles having a diameter or major distance size less than 100 nm, suspended in a matrix formed from the reaction product. The anti-reflection coating has a refractive index less than 1.5.

According to certain example embodiments, the metal alkoxide may comprise tetraethyl orthosilicate, and/or the transition metal alkoxide may comprise titanium n-butoxide.

According to certain example embodiments, the solution has a molar ratio of titania to silica in the range from 0.15 to 0.84.

According to certain example embodiments, the titanium dioxide nanoparticles may have a diameter or major distance size less than 100 nm, more preferably less than 75 nm, and still more preferably less than 50 nm, and possibly less than 10 nm.

These aspects, features, and example embodiments may be used separately and/or applied in various combinations to achieve yet further embodiments of this invention.

## Brief description of the drawings

FIGURE 1 is a transmission electron microscopy (TEM) image of $TiO_2$ nanoparticles in solution.
FIGURE 2 shows an XRD pattern of titanium dioxide nanoparticles from a thin film of solution coated on glass.
FIGURE 3 schematically illustrates a hydrolysis of $Ti(OBu)_4$ with acid as a catalyst.
FIGURE 4 schematically illustrates condensation of hydrolyzed $Ti(OBu)_4$ by alcoxolation.

FIGURE 5 schematically illustrates condensation of hydrolyzed $Ti(OBu)_4$ by olation.

FIGURE 6 schematically illustrates a reaction between hydrolyzed $Ti(OBu)_4$ and $TiO_2$ nanoparticles.

FIGURE 7 schematically illustrates hydrolysis of TEOS with an acid as a catalyst.

FIGURE 8 schematically illustrates condensation of hydrolyzed TEOS with an acid as a catalyst.

FIGURE 9 schematically illustrates reaction between hydrolyzed TEOS and $SiO_2$ elongated nanoparticles.

FIGURE 10 schematically illustrates a self-cleaning anti-reflection coated article.

FIGURE 11 depicts transmittance curves of certain self-cleaning AR coated glasses.

FIGURE 12 includes SEM images of self-cleaning AR coated glass. A and B are cross-sectional images with low and high magnification; C and D are top surface titled at 45 degrees with low and high magnification.

FIGURE 13 schematically illustrates a photocatalytic mechanism of $TiO_2$.

FIGURE 14 illustrates UV absorption of methylene blue solution vs. wavelength as function of UV irradiation time.

FIGURE 15 illustrates UV absorption of methylene blue solution vs. wavelength as function of UV irradiation time.

FIGURE 16 illustrates UV absorption of methylene blue solution vs. wavelength as function of UV irradiation time.

FIGURE 17 illustrates photocatalytic degradation of methylene blue vs. UV irritation time.

FIGURE 18 illustrates UV irradiation time for different self-cleaning AR coated articles.

FIGURE 19 illustrates water contact angles of self-cleaning AR coated articles with UV irradiation time.

FIGURE 20 schematically illustrates schematically super-hydrophilic surface produced by self-cleaning antireflection coated articles.

FIGURE 21 illustrates transmittance curves of self-cleaning AR coated articles measured from a repeatability test

FIGURE 22 illustrates transmittance curves of self-cleaning AR coated articles measured from a repeatability test, and the labels are same as those in Table 7.

FIGURE 23 shows AFM images of self-cleaning AR coated articles.

FIGURE 24 illustrates the roughness of self-cleaning AR coated articles vs. molar ratio of $TiO_2$ to $SiO_2$.

FIGURE 25 illustrates optical thickness and refractive index of self-cleaning AR coated articles with different molar ratios of $TiO_2$ to $SiO_2$ on coating layer.

## Detailed description of Example embodiments

Self-cleaning anti-reflection (AR) solar float glass coated articles may be prepared by sol-gel process with sol containing elongated silica nanoparticles and spherical titanium dioxide nanoparticles. It is believed that a geometrical package of nanoparticles may include a porous structure of a thin film coating layer, by which anti-reflection glass may be produced.

In order to improve properties relating to the nanoparticles in the layer (e.g., to enhance the adhesive strength of nanoparticles), certain example embodiments envision the use of (i) metal alkoxides (such as tetraethyl orthosilicate (TEOS), tetramethyl orthosilicate (TMOS) or other suitable metal alkoxides) and (ii) transition metal alkoxides (such as titanium n-butoxide).

In an example aspect, the nanoparticles may have a size less than 100 nm, less than 75nm, less than 50 nm, less than 25 nm, less than 10 nm, or less than 5 nm.

In certain embodiments, one or more suitable metal alkoxides may be used, such as tetraethyl orthosilicate (TEOS), tetramethyl orthosilicate (TMOS), tetraisopropoxysilane; tetrakis(dimethylsiloxyl) silane; tetrakis(butoxyethoxyethoxy) silane; tetarksi(ethoxyethoxy) silane; tetrakis(2-hydroxyethoxy) silane; tetrakis(methoxylethoxyethoxy) silane; tetrakis(methoxyethoxy) silane; tetrakis(trimethylsiloxy) silane; tetramethoxysilane; tetra-n-propoxysilane; trimethoxysilane; trimethoxysilane; triethoxfluorosilane; p-(triethoxysilyl) acetophenone; 3,3,3-trifluoropropyl) trimethoxysilane; trimethoxysilane; tris(dimethylsiloxy) ethoxysilane; vinyltris(dimethylsiloxy) silane, or other metal alkoxides corresponding to the general formula $M(OR)_n$, where M corresponds to a metal or metalloid (such as Al, Ga, Ge, Si, etc.), where OR corresponds to an alkoxide of the generic formula $OC_mH_{2m+1}$, and where n is any number greater than o and m is any integer greater than or equal to o.

In certain example embodiments, one or more suitable transition metal alkoxides may be, for instance, titanium alkoxides, such as titanium isopropoxide, titanium n-butoxide (TBO), titanium tetraisobutoxide, titanium tetraisopropoxide, titanium tetraethoxide, methyltitanium triisopropoxide; pentamethylcyclopentadienyltitanium trimethoxide; penyltitanium triisopropoxide; titanium bis(triethanolamine)-diisopropoxide; titanium t-butoxide; titanium chloride triisopropoxide; titanium di-n-butoxide bis(2-ethylhexanoate); titanium dichloride diethoxide; titanium ethoxide. Other transition metal alkoxides may also be used, such as those corresponding to the general formula $M(OR)_n$, where M corresponds to a transition metal, where OR corresponds to an alkoxide of the generic formula $OC_mH_{2m+1}$, and where n is any number greater than o and m is any integer greater than or equal to o.

In an example aspect, the molar ratio of $TiO_2$ to $SiO_2$ in a suitable sol may be in the range from 0.05 to 1.00, 0.15 to 0.84, 0.10 to 0.90, 0.20 to 0.80, 0.3 to 0.7, 0.45 to 0.55. All sub-ranges of those molar ratios are also envisioned and possessed.

It is believed that a hydrolysis and condensation reaction of the metal alkoxide and transition metal alkoxide (e.g., of TEOS and titanium n-butoxide (TBO)) may generate a cross-linked network structure involving nanoparticles and condensed TEOS and TBO.

In certain embodiments, it may be possible to achieve a higher transmittance of AR coated glass with Tqe% gain from range of 1.3% to 2.8%, e.g., by obtaining a thin film with gradient refractive index. The refractive index of thin film coated on glass surface may be in the range of from 1.27 to 1.38, corresponding to optical thickness from 162 nm to 82 nm. Photo-catalysis of titanium dioxide may provide a self-cleaning performance, e.g., as shown by degradation of methylene blue and change of water contact angle during the irradiation of UV light. An increase of $TiO_2$ amount in coating layer may enhance self-cleaning performance of AR coated glass, but the transmittance of glass may decrease in some instances. Good or excellent durability evaluated by short term tests may be achieved for developed self-cleaning AR coated glass. Good repeatability of self-cleaning AR coated glass made by sol-gel process indicates that the developed procedure may be reliable.

In certain exemplary embodiments, the firing may occur in an oven at a temperature ranging preferably from 550 to 700°C (and all sub-ranges therebetween), more preferably from 575 to 675°C (and all sub-ranges therebetween), and even more preferably from 600 to 650°C (and all sub-ranges therebetween). The firing may occur for a suitable length of time, such as between 1 and 10 minutes (and all sub-ranges therebetween) or between 3 and 7 minutes (and all sub-ranges therebetween).

In addition, the composition of the atmosphere's gas may be controlled during curing; that is, the curing may occur, for example, in an inert atmosphere of nitrogen and/or argon, or in an atmosphere or other suitable gas. Furthermore, partial curing is contemplated and included within the term "curing" and its variants.

Although the spin-coating method may be used for applying the sol to a substrate, the uncured coating may be deposited in any suitable manner, including, for example, roller-coating, spray-coating, flow-coating, dip-coating, curtain-coating and any other method of depositing the uncured coating on a substrate.

Similarly, any suitable heat-resistant substrate (such as any type of glass) maybe used in certain example embodiments.

Several examples were prepared, so as to illustrate exemplary embodiments of the present invention.

*Preparation of "Gen 1.5 Sol"*

A colloidal solution (referred to herein as a "Gen. 1.5 sol") with elongated $SiO_2$ nanoparticles and tetraethyl orthosilicate as a binder is prepared using the formulation in Table 1 below. The procedure includes the following steps: 69.714 g of n-propyl alcohol is placed into 200 ml of glass bottle with a Teflon stirring bar. Thereafter, 1.808 g of water, 3.637 g of tetraethyl orthosilicate and 19.951 g of solution with nano silica ($SiO_2$) particles are added, in that order. The solution is stirred after adding 4.89 g of AcOH and appeared cloudy, but no visible particles or precipitation are observed after aging 3 months.

**Table 1. Formulation of Gen 1.5 Sol ($SiO_2$ Colloidal Solution)**

| Chemicals | M.W. (g/mol) | Wt% | Mol ratio |
|---|---|---|---|
| n-propyl alcohol | 60.1 | 69.714 | 1.000 |
| Deionized water | 18 | 1.808 | 0.070 |
| Acetic acid (AcOH) | 60.05 | 4.890 | 0.056 |
| Tetraethyl orthosilicate (TEOS) | 208.33 | 3.637 | 0.012 |
| Silica nanoparticles (*IPA-ST-UP) | N/A | 19.951 | - |
| Total | - | 100 | - |
| *IPA-ST-UP: elongated $SiO_2$ particle; diameter: 40-100 nm; length: 9-5 nm; concentration: 15% in isopropanol | | | |

In the above formula for Gen 1.5 sol, the silica nanoparticles include about 15 wt% amorphous silica, 85 wt% isopropanol and less than about 1 wt% water. If elongated silica particles are used, they can range in diameter between 9-15 nm with an average length of 40-100 nm and with the OH group present in an amount of about 5-8 $OH/nm^2$. Water-based silica nanoparticles, such as SNOWTEX from Nissan Chemical, can also be used, with the size of silica nanoparticles ranging from 10-100 nm at a weight percentage of 20-40%.

In addition to elongated silica nanoparticles, spherical silica nanoparticles, such as those produced under the trade name ORGANOSILICASO (available from Nissan Chemical), can be used having a particle size of between 9-15/40-100 nm, a wt% $SiO_2$ of 15-16%, less than 1% water, a viscosity of less than 20 mPa·s and a specific gravity of between 0.85 and 0.90. The weight percentage of spherical silica nanoparticles in solution may range from 20-40%, which corresponds to 60-80% of solvent in the silica solution. Minor amounts of water in the range from 0.3 to 3 wt% may also be present in the final solution.

For Gen 1.5 sols such as those in Table 1, the amount of solid $SiO_2$ may be about 4 wt%. But the solid percentage can be from 0.6-10 wt%, with the amount of solvent comprising 70-97 wt%. The amount of tetraethyl orthosilicate (TEOS) used as a binder ranges from 0.3 to 20 mol%; the amount of acetic acid (which serves as a catalyst) may range from 0.01-7 mol%; and the molar ratio of water to silica ranges from 1.1 to 50.

Although acetic acid may be particularly mentioned, other acids or bases could be used. For example, the catalyst could be an inorganic acid, an organic acid, or an inorganic base. Inorganic acids may include, for example, hydrochloric acid, nitric acid, phosphoric acid, sulphuric acid, boric acid, hydrofluoric acid, hydrobromic acid, perchloric acid, etc. Organic acids may include, for example, lactic acid, formic acid, citric acid, oxalic acid, uric acid, etc. Inorganic bases may include, for example, ammonium carbonate, ammonium hydroxide, barium hydroxide, cesium hydroxide, magnesium hydroxide, potassium hydroxide, rubidium hydroxide, sodium hydroxide, etc.

A typical solvent used in the silica solution may include alcohol, such as isopropanol, methanol, n-propanol, and ethanol. Other solvents may include N,N-dimethyl acetamide, ethylene glycol, ethylene glycol mono-n-propyl ether, methyl ethyl ketone, ethylene oxide, formamide, dimethylformamide, acetonitrile, dioxane, tetrahydrofuran, 2-ethoxyethanol, 2,2', 2"-nitrilotriethanol, and methyl isobutyl ketone. Isopropanol is the recommended solvent for silica nanoparticles ranging in size from 10 to 100 nm.

*Materials*

Tetraethyl orthosilicate (TEOS, available from Aldrich), N-propyl alcohol (NPA, available from Aldrich), acetic acid (AcOH, available from Fisher Scientific), elongated silica nanoparticle (IPA-ST-UP, 15% in IPA, available from Nissan Chemical) and titanium n-butoxide, (TBO, available from Gelest) were used without purification. De-ionized water with conductivity as 18 $\Omega$/cm was used. Solar float glass (SFO, thickness of 3.2 mm) was obtained from Phoenicia America-Israel (owned by Guardian). SFO glass has tin and air sides, which can be recognized with short wavelength UV light (256 nm). Spherical $TiO_2$ nanoparticles with size as 40-50 nm and anatase structure are dispersed in IPA (9.6 wt.%, CCA-1, Cinkarna). The particle size of the titania nanoparticles is generally a diameter (or a major distance across the particle) with the assumption that the particles are believed to be approximately spherical.

It is noted that solar float glass typically includes a low iron content. High transmission, low iron glass that may be used in certain example embodiments may include, for example, U.S. Patent Nos. 7,700,870; 7,557,053; and 5,030,594 and U.S. Publication Nos. 2006/0169316; 2006/0249199; 2007/0215205; 2009/0223252; 2010/0122728; 2009/0217978; and 2010/0255980.

*Preparation of sols for self-cleaning AR coated glass*

The sol for making *self-cleaning* AR coated articles was prepared by mixing 10 g of TBO into 30 g of NPA. The sol was stirred at room temperature for 24 hours. Then, 10 g of above sol was mixed with 0.5 g of CCA-1. The sol with $TiO_2$ nanoparticles was further mixed with Gen 1.5 sol with $SiO_2$ percentage as 4% and 5%, respectively, to generate the final sol for coating application. Sols with $SiO_2$ percentages of 4% and 5% were prepared by diluting Gen 1.5 (12 wt%) sol with NPA. A yellow color may be observed when mixing Gen 1.5 sol and sol with CCA-1.

Table 2 lists formulations of Gen 1.5 with $SiO_2$ percentage of 12 wt%. Tables 3 and 4 list the formulations of the final sol. Table 5 presents the molar ratio of $SiO_2$ to $TiO_2$ in a final sol, which may affect the performance of self-cleaning AR coated glass.

**Table 2. Formulation of Gen 1.5 (12 wt%)\***

| Chem. | M.W. (g/mol) | wt., g |
|---|---|---|
| NPA | 60.100 | 24.201 |
| De-ion water | 18.000 | 1.556 |
| Acetic acid (AcOH) | 60.050 | 4.206 |
| Tetraethyl orthosilicate (TEOS) | 208.330 | 10.799 |
| Nano silica particle (IPA-ST-Up)\* | N/A | 59-239 |

(continued)

| Chem. | M.W. (g/mol) | wt., g |
|---|---|---|
| Total | | 100.000 |
| * Amount of $SiO_2$ is calculated from silica nanoparticle and TEOS | | |

**Table 3. Formulations of sol made from Gen 1.5 (4%) and $TiO_2$ nanoparticle**

| | Wt(g) | | | | |
|---|---|---|---|---|---|
| ID | Gen 1.5; 4% | TBO | NPA | CCA-1 | Total |
| Example 1 | 3.5 | 0.119 | 0.357 | 0.024 | 4 |
| Example 2 | 3 | 0.238 | 0.714 | 0.048 | 4 |
| Example 3 | 2 | 0.476 | 1.429 | 0.095 | 4 |
| | wt% | | | | |
| Example 1 | 87.5 | 2.976 | 8.929 | 0.595 | 100 |
| Example 2 | 75 | 5.952 | 17.857 | 1.190 | 100 |
| Example 3 | 50 | 11.905 | 35.714 | 2.381 | 100 |

**Table 4. Formulations of sol made from Gen 1.5 (5%) and $TiO_2$ nanoparticle**

| | Wt(g) | | | | |
|---|---|---|---|---|---|
| ID | Gen 1.5; 5% | TBO | NPA | CCA-1 | Total |
| Example 4 | 3.5 | 0.119 | 0.357 | 0.024 | 4 |
| Example 5 | 3.0 | 0.238 | 0.714 | 0.048 | 4 |
| Example 6 | 2.0 | 0.476 | 1.429 | 0.095 | 4 |
| | wt% | | | | |
| Example 4 | 87.5 | 2.976 | 8.929 | 0.595 | 100 |
| Example 5 | 75.0 | 5.952 | 17.857 | 1.190 | 100 |
| Example 6 | 50.0 | 11.905 | 35.714 | 2.381 | 100 |

**Table 5. Composition of $TiO_2$ and $SiO_2$ in sol used for making *self-cleaning* AR coated articles**

| | wt (g) | | | wt% | | Mol. | | Mol. ratio |
|---|---|---|---|---|---|---|---|---|
| ID | $SiO_2$ | $TiO_2$ | Total | $SiO_2$ | $TiO_2$ | $SiO_2$ | $TiO_2$ | $TiOP_2/SiO_2$ |
| Example 1 | 0.140 | 0.028 | 0.168 | 3.5 | 0.699 | 0.0023 | 0.0003 | 0.150 |
| Example 2 | 0.120 | 0.056 | 0.176 | 3 | 1.397 | 0.0020 | 0.0007 | 0.350 |
| Example 3 | 0.080 | 0.112 | 0.192 | 2 | 2.794 | 0.0013 | 0.0014 | 1.051 |
| Example 4 | 0.175 | 0.028 | 0.203 | 4.375 | 0.699 | 0.0029 | 0.0003 | 0.120 |
| Example 5 | 0.150 | 0.056 | 0.206 | 3.75 | 1.397 | 0.0025 | 0.0007 | 0.280 |
| Example 6 | 0.100 | 0.112 | 0.212 | 2.5 | 2.794 | 0.0017 | 0.0014 | 0.841 |
| Amount of $SiO_2$ is calculated from silica nanoparticle and amount of TEOS<br>Amount of $TiO_2$ is calculated from $TiO_2$ nanoparticle and amount of TBO | | | | | | | | |

*Preparation of self-cleaning AR coated glass*

SFO glass (3"x3") with a thickness of 3.2 mm was washed with soap, rinsed with de-ionized water, and dried with $N_2$ gas. A thin film of $TiO_2$ and $SiO_2$ nanoparticles was coated on SFO glass by spin coating with the sols presented in Tables 3 and 4. The spin coating speed was performed at 1300 rpm and a ramp of 255 rps. With the help of a pipette, 2 ml of sol was transferred to the tin side of SFO glass that was mounted in a sample stage of a spin coater. The spin coating time was set at 30 sec. The back side of coated glass was cleaned with tissue paper soaked with IPA after spin coating. Then, the coated glass was heated in a box furnace with 650°C for 3.5 min. A solid coated layer was observed before heating, which indicates that partial condensation may occur during spin coating.

Characterization

*UV-vis spectroscopy*

Tqe% of raw glass and AR coated glass is measured by UV-Vis spectroscopy (PE-1050) from 400 to 1200 nm, and average Tqe% is calculated by following equation:

$$Tqe\% = \frac{\sum_{i=400}^{1200}(Tqe\%)_i}{\sum_{i=400}^{1200}N_i} \qquad\qquad (1)$$

The transmission gain, $\Delta$Tqe% is calculated by subtracting Tqe% of raw glass from Tqe% of AR coated glass in the case of developed self-cleaning AR coated glass, as shown in Eq. (2); and subtracting from pre Tqe% of *self-cleaning* AR coated glass from post Tqe% of self-cleaning AR coated glass in the case of durability test as shown in Eq. (3).

$$\Delta Tqe\%_{|Optica} = (Tqe\%)_{AR} - (Tqe\%)_{raw} \qquad\qquad (2)$$

$$\Delta Tqe\%_{|Durability} = (Tqe\%)_{psotAR} - (Tqe\%)_{preAR} \qquad\qquad (3)$$

*Water contact angle*

Water contact angle of self-cleaning AR coated glass was measured with contact angle instrument (FTA 135) at room temperature. 10 g of methylene blue solution with concentration of $2x\ 10^{-5}$ mol/l is added into one 100 ml glass beaker. One piece of self-cleaning AR coated glass with size as 20 mm x 20 mm is immersed into solution and glass beaker is covered by one piece of quartz glass with thickness of 2 mm. The solution is irradiated with a UV lamp with a wavelength of 365 nm and power of 12.6 mW/cm$^2$. Water contact angle of self-cleaning AR coated glass is measured at different irradiation times. The AR coated glass is removed from solution and rinsed with de-ionized water and dried with $N_2$ gas before testing. One sessile drop of de-ionized water ($\sim$2.3 $\mu$l) is wetted on the surface of glass, and the water contact angle is immediately measured. The data is for the average values tested from three points on glass. The calculation of contact angle is performed by software (FTA, version 1.966).

*Atomic force morphology (AFM)*

The topography of self-cleaning AR coated glass is investigated by atomic force microscope (AFM, AP-0100, Parker Sci. Instrument). The non-contact method, preferred for soft surfaces in general, is used. The size of sample is about 2 cm x 2 cm, and the scanning area is 5 $\mu$m x 5 $\mu$m. The scanning rate is 0.5. The surface roughness is quantitatively characterized by measuring the arithmetic average roughness, $R_a$, and root mean square roughness, $R_m$. The definition of $R_a$ and $R_m$ is described in following equations.

$$R_a = \frac{1}{n}\sum_{i=1}^{n}|y_i| \qquad\qquad (4)$$

$$R_m = \sqrt{\frac{1}{n}\sum_{i=1}^{n} y_i^2} \tag{5}$$

where $y_i$ is the height of peak in AFM image.

*XRD analysis*

A $TiO_2$ thin film is prepared by coating CCA-1 solution on SFO glass. The thin film is heated at box furnace at 200C for 30 min. The phase structure of $TiO_2$ thin film is characterized by X-ray diffraction (XRD, D8 advance, Bruker axs, CuK$\alpha$). The scan rate is 1.2 degree/min and the scan range is from 20 degree to 65 degree.

*Ellipsometer*

Optical thickness and refractive index of *self-cleaning* AR coated glass are measured with an Ellipsometer (J. A. Woollam Co., HS-190). The refractive index of AR coated glass was reported at a reference wavelength of 550 nm. The complex reflectance ratio, p of a thin film is a function of ellipsometric factor of $\psi$ and $\Delta$. The fundamental equation of ellipsometry is described as follows:

$$\rho = \tan\psi e^{i\Delta} = f(n1, n2, n, \phi, d, \lambda, k) \tag{6}$$

where n1, n2, and n represent the refractive index of air, substrate, and film, respectivity. $\Phi$ and $\lambda$ represents the incident angle and wavelength of incident light, respectively. D and k are the thickness and extinction coefficient of thin films. In this study, the optical constants and thickness of glass substrate and thin film coating layer are kept constant. The relationship of $\psi$-$\lambda$ and $\Delta$-$\lambda$ were fitted under incident angle of 75 degree after adjusting n, d, k. Fitting the optical constants of thin films with a Cauchy dispersion model described as follows:

$$n(\lambda) = A + \frac{B}{\lambda^2} + \frac{C}{\lambda^4} + \ldots \tag{7}$$

Eq. (7) coordinates ellipsometric parameters to allow the determination of both thickness and optical constants for most transparent thin films. The mean square error (MSE) is a destination function to evaluate the quality of the match between measured and model calculated data. MSE could be described as follows:

$$MSE = \frac{1}{2N-M}\sum_{i=1}^{N}[(\frac{\psi_i^{mod}-\psi_i^{exp}}{\sigma_{\psi,i}^{exp}})^2 + (\frac{\Delta_i^{mod}-\Delta_i^{exp}}{\sigma_{\Delta,i}^{exp}})^2] \tag{8}$$

where $\Delta$ and $\psi$ are the ellipsometric factors, superscript "mod" means the calculated data and superscript "exp" means the experimental data. N is the number of ($\psi$, $\Delta$). M is the number of variable parameters. $\Sigma$ is the standard mean square deviation.

*Evaluation self-cleaning AR coated glass by degradation of methylene blue*

A series of methylene blue solutions with concentration from $5\times10^{-7}$ to $2\times10^{-5}$ mol/l are prepared by dissolving methylene blue into de-ionized water. The absorption of methylene blue solution is analyzed by UV-Vis spectroscopy (PE-900) from 200 to 800 nm. The maximum peak around 633 nm is used to plot standard curve. 10 g of methylene blue solution with concentration of $2 \times 10^{-5}$ mol/l is added into one 100 ml glass beaker. One piece of self-cleaning AR coated glass with size as 25 mm x 25 mm is immersed into solution and the glass beaker is covered with one piece of quartz glass with thickness of 2 mm. The solution was irradiated by a UV lamp with a wavelength of 365 nm and a power at 12.6 mW/cm$^2$. The concentration of methylene blue solution is analyzed at different times by UV-vis spectroscopy in order to evaluate the degradation of methylene blue.

*Durability test*

*-Water boil*

The water boil test is performed as follows. The *self-cleaning* AR coated glass is immersed in one beaker filled with de-ionized water at 100°C. After 10 min, the AR coated glass is removed from boiling water and dried with $N_2$ gas before UV-vis measurement. The change of Tqe% is calculated as the difference of Tqe% before and after the water boil test. The water boil test is deemed acceptable when $\Delta$Tqe% < $\pm$ 0.5%.

*-NaOH solution (0.1N)*

The NaOH test is performed as follows. Self-cleaning AR coated glass was immersed in an NaOH solution (0.1 N) filled in one beaker at room temperature. After 1 hour, the glass is taken from the solution, rinsed with de-ionized water, and dried with $N_2$ gas. The change of Tqe% was calculated by the difference of Tqe% before and after NaOH test. The test is deemed acceptable when $\Delta$Tqe% < $\pm$ 0.5%.

*-Tape pull*

The tape pull test is performed as follows. The tape (3179C, available from 3M) is adhered to the surface of self-cleaning AR coated glass by pressing the tape with one's finger. After 1.5 minutes, the tape is pulled quickly by hand, and the residual adhesive of tape is removed with tissue paper (AccuWipe) soaked by NPA. The change of Tqe% is calculated by the difference of Tqe% before and after the tape pull test. The tape pull test is deemed acceptable when $\Delta$Tqe% < 1.5%.

*-Crockmeter*

The crockmeter test uses glass that is 3" x 3", and the total test cycle number is 750. The crockmeter test is deemed acceptable when $\Delta$Tqe% < 1.5%.

Results and discussion

*TiO$_2$ nanoparticles*

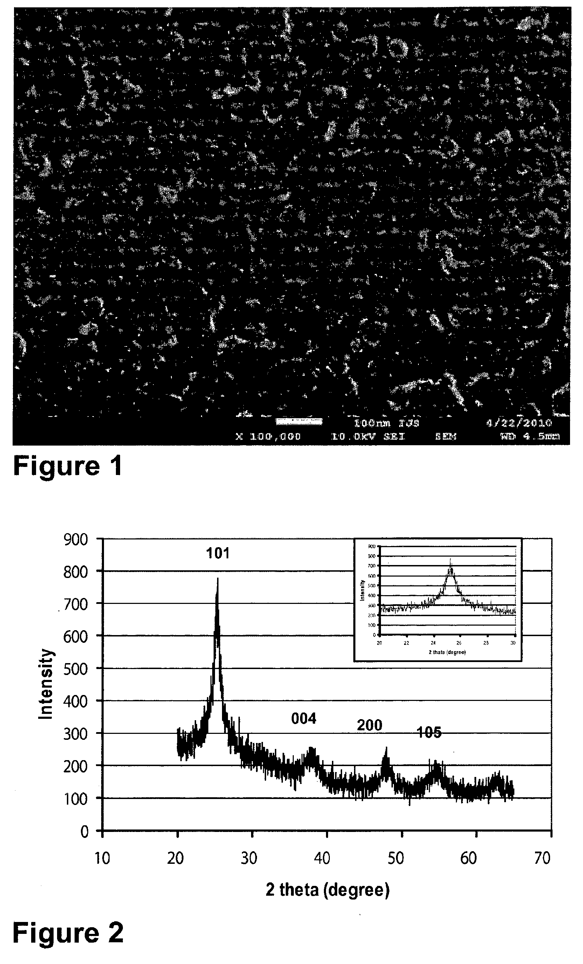

Figure 1 is a transmission electron microscopy (TEM) image of $TiO_2$ nanoparticle in CCA-1 solution provided by Cinkarna. $TiO_2$ with anatase structure and size around 50 nm can be observed. The TEM picture of $TiO_2$ nanoparticles in the CCA-1 solution was provided by Cinkarna. Figure 2 is an XRD pattern of $TiO_2$ nanoparticles coated on a glass surface; the thin film is heated at 200 °C for 30 min.

The XRD pattern indicates that there is one peak at 2 theta degree as 25.20°, which corresponds to the (101) reflection of the crystalline anatase phase. Other weak anatase peaks at 2 theta degree as 38°, 48 and 55° are also resolved.

The crystalline size of $TiO_2$ nanoparticle can be estimated by Scherrer equation described as follows:

$$B_{size}(2\theta) = \frac{K\lambda}{Lcon\theta} \qquad\qquad (9)$$

where K is Scherrer constant; L is the apparent size of crystalline domain (A); B is the full width half maximum; $\theta$ is scanning angle and $\lambda$ is wavelength (Å).

In order to examine a specific peak in detail, the intensity 2 theta around 20 to 30 degree is shown under magnification in the set of Figure 2. $TiO_2$ nanoparticles are assumed to have generally spherical shapes; therefore, K is 0.89 and $\lambda$ is 1.54 A. B is estimated as 1.3 degrees, then B = 9.47 nm. The estimated crystalline size is smaller than the one observed by TEM. The difference could be explained from the assumption of the spherical shape. That is, it may be that $TiO_2$ nanoparticles are not an exact spherical shape as shown in TEM picture.

*Formation of cross-linked thin film with SiO$_2$ and* **TiO$_2$** *nanoparticles*

Several factors are believed to distinguish transition metal alkoxides from silicone alkoxides, which are frequently used as precursors in sol-gel related processes. First, the lower electronegativity of transition metals may enable them be more electrophilic reaction and thus less stable toward hydrolysis, condensation and other nucleophilic reactions. Secondly, transition metals may exhibit several stable coordinations, and when coordinatively unsaturated, they may be able to expand their coordination via olation, oxolation, alkoxy bridge, or other nucleophilic association mechanisms. For coordinatively saturated metal alkoxides in the absence of catalyst, both hydrolysis and condensation may occur by nucleophilic substitution ($S_N$) mechanisms involving nucleophilic addition ($A_N$) followed by proton transfer from the attacking molecule to an alkoxides or hydrogen-ligand within the transition state and removal of the protonated species as either alcohol (alcoxolation) or water (oxolation). Both the hydrolysis and condensation rates, and the structure of final products, can be impacted by an acid or base catalyst. For instance, acid can protonate negatively charged alkoxides group, by which the reaction kinetics may be enhanced as producing a good leaving group. Acid-catalyzed condensation may be directed preferentially toward the ends rather the middle of chains, resulting in a more extended, less highly branched cross-linked network.

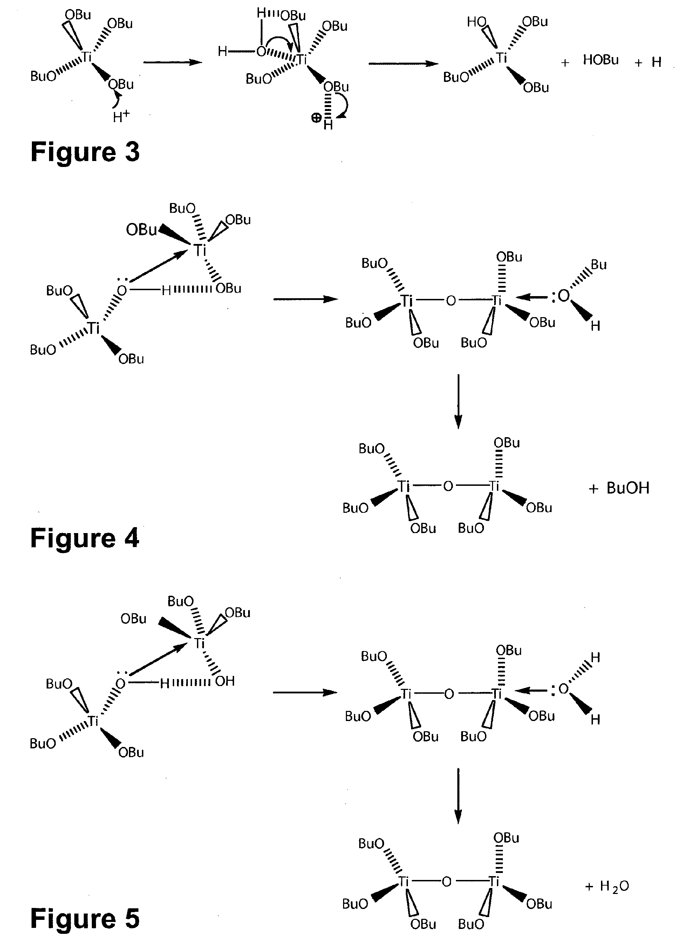

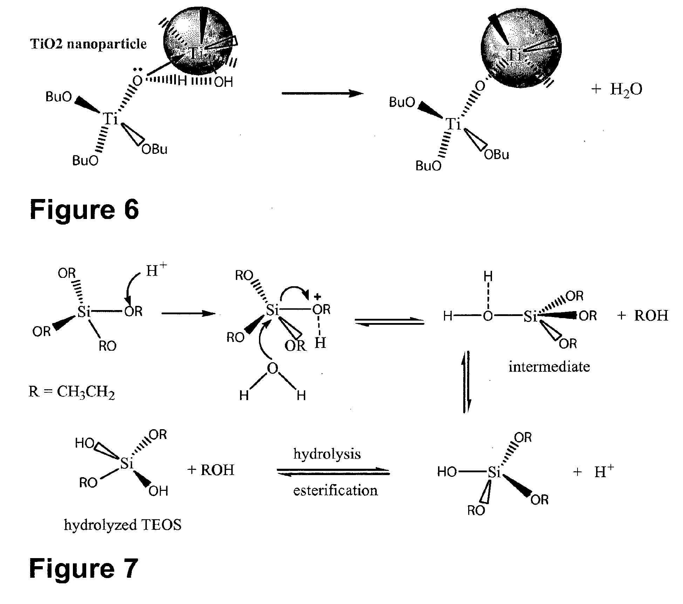

It is believed that TBO may be hydrolyzed with an acid catalyst as shown in Figure 3. First, a n-butoxide group is activated by the attacking of one proton, by which electron density is shifted from titanium atom to oxygen atom. Then, one complex is generated by one water molecule and activated TBO. The leaving of HOBu group from complex results hydrolyzed $Ti(OBu)_4$. Hydrolized $Ti(OBu)_4$ can be further condensed by route of alcoxolation or olation as shown in Figures 4 and 5. In the way of alcoxolation, the complex is formed by hydrolyzed $Ti(OBu)_4$ and $Ti(OBu)_4$, and one BuOH molecule is produced as a by-product (see Figure 4). Water as a by-product is generated among hydrolyzed $Ti(OBu)_4$ (see Figure 5). Furthermore, hydrolyzed $Ti(OBu)_4$ may be attached with titanium dioxide nanoparticle as shown in Figure 6. A three-dimensional cross-linked network may be developed, in which titanium dioxide nanoparticles act as the core bond with different hydrolyzed $Ti(OBu)_4$.

Meanwhile, TEOS may be hydrolyzed by $SN_2$ mechanisms in the presence of acid. Figure 7 illustrates a process of TEOS hydrolysis with an acid as the catalyst. First, the electrophilicity of the Si atoms is enhanced by the attack of a proton, H+, released from acetic acid to the OR group of TEOS. The intermediate shown in Figure 7 is generated by the reaction of water with an Si atom. The reaction intermediate produces the hydrolyzed TEOS and releases a proton, $H^+$, which can be again used as the catalyst. This process may be repeated to generate various hydrolyzed TEOS, for example, silicic acid $Si(OH)_4$, as fully hydrolyzed TEOS. It is believed that the hydrolysis of TEOS may be a reversible reaction and esterification exists in the process.

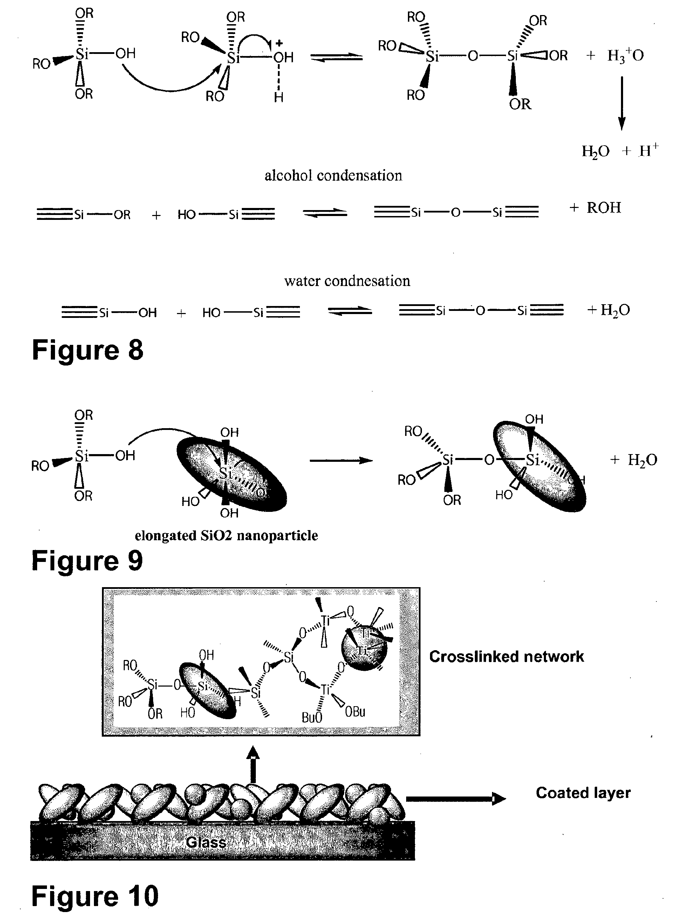

The hydrolyzed TEOS may be further condensed by route of water and alcohol condensation as shown in Figure 8. The reversible reaction may be hydrolysis and alcoholysis, respectively. First, a proton will attack an oxygen atom in a hydroxyl group of a hydrolyzed alkoxysilane, which increases electrophilicity of an Si atom, and it is now easily attacked by a hydroxyl group from a hydrolyzed alkoxysilane molecule. One water molecule is released from intermediate and $H_3+O$ is generated from water and a proton. A $CH_3CH_2$ group in TEOS worked as electron withdraw increases the acidity of the Si atom, which may consequently increase the condensation rate.

Hydrolyzed TEOS may also attack a silica nanoparticle with hydroxyl group on surface as shown in Figure 9, by which the cross-linked network may be developed with nanoparticles as building materials and hydrolyzed TEOS as binder.

Figure 10 schematically shows the structure of *self-cleaning* anti-reflection coated glass made by a sol-gel process, by which $TiO_2$ and $SiO_2$ nanoparticles are geometrically packaged on a glass surface and nanoparticles are connected by hydrolyzed TEOS and TBO.

*Anti reflection coated glass*

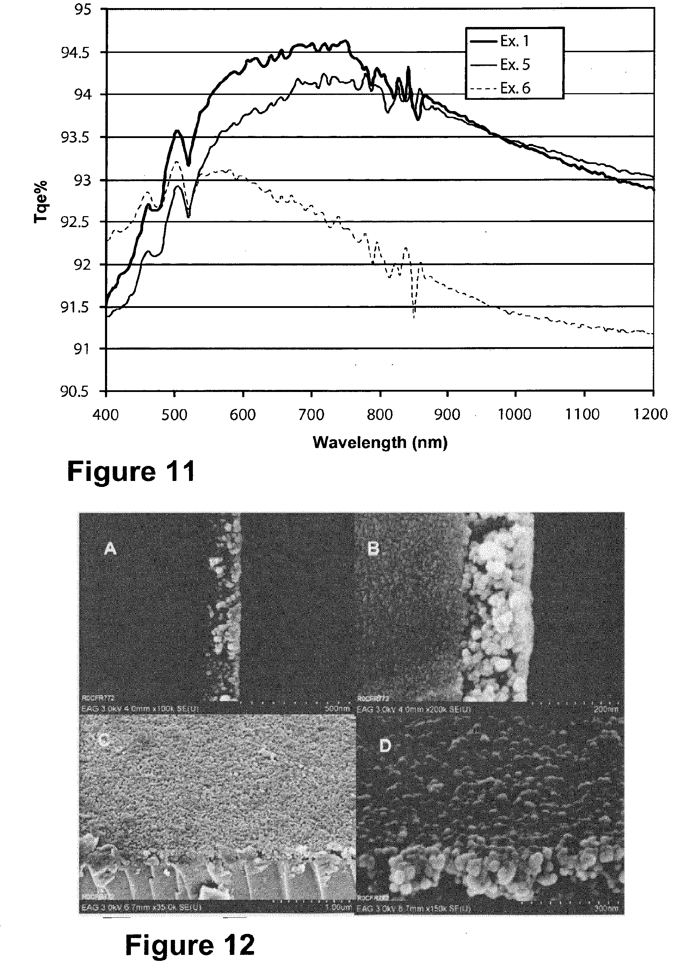

Table 6 lists transmittance, Tqe%, and Tqe% gain of different self-cleaning AR coated glasses made with different $TiO_2$ amounts. It is clear that there is a decrease on Tqe% gain of *self-cleaning* AR coated glass when the $TiO_2$ amount is increased in coating layer. Figure 11 shows the transmittance curves of self-cleaning AR coated glass listed in Table 5. Typical transmittance curve and higher Tqe% gain demonstrate the performance of anti reflection.

**Table 6. Tqe% gain of *self-cleaning* AR coated glass**

| ID | Glass | $TiO_2$ wt.% | Peak (nm) | Tqe% raw glass | Tqe% AR | Tqe% gain |
|---|---|---|---|---|---|---|
| Example 1 | SFO/Sn | 0.699 | 750 | 90.803 | 93.616 | 2.813 |
| Example 5 | SFO/Sn | 1.397 | 715 | 90.803 | 93.389 | 2.586 |
| Example 6 | SFO/Sn | 2.794 | 500 | 90.803 | 92.105 | 1.302 |
| *The formulations are listed in Table 5. ***SFO glass and coated side is Tin side. | | | | | | |

*SEM image of self-cleaning AR coated glass*

Figure 12 illustrates the morphologies of self-cleaning AR coated glass measured with SEM imaging. It is believed that there are many nano-dots on both cross-sectional and top surfaces, which are made by condensation of hydrolyzed TEOS and elongated silica nanoparticles. The pore structure exists in the thin film with denser structure on the top surface, and more pores can be seen at bottom of thin film. Fast evaporation of solvent, NPA, and alcohols generated during condensation may result in the formation of a denser top surface. A denser top surface may reduce the likelihood of further evaporation of solvent, which can be removed during the heating process. This may be why more pores can be found at the bottom of thin film. A rough thin film surface with tiny holes can be seen from top surface. The tiny holes may be generated by evaporation of solvent during heating process. Pore structure may be a critical factor to build an AR thin film, and a rough surface may improve hydrophilicity of surface.

*Self-cleaning coated glass*

Titanium dioxide is believed to be an efficient common materials with photocatalytic properties, very high stability, and very low cost. It is believed that there are two major crystal structures in $TiO_2$, this is, anatase and rutile. Among them, anatase $TiO_2$ is believed to exhibit higher photocatalytic performance. The band gap of anatase type titanium dioxide is believed to be 3.2 eV, which is equivalent to a wavelength of 388 nm.

The absorption of ultraviolet rays shorter than this wavelength is believed to promote reactions. The absorption of photons is believed to delocalize a valence electron of $TiO_2$ and excite it to the conduction band of the semiconductor. These photo-excited charge carriers may initiate the degradation of the adsorbed chemical species by one or more forms of electron transfer reactions.

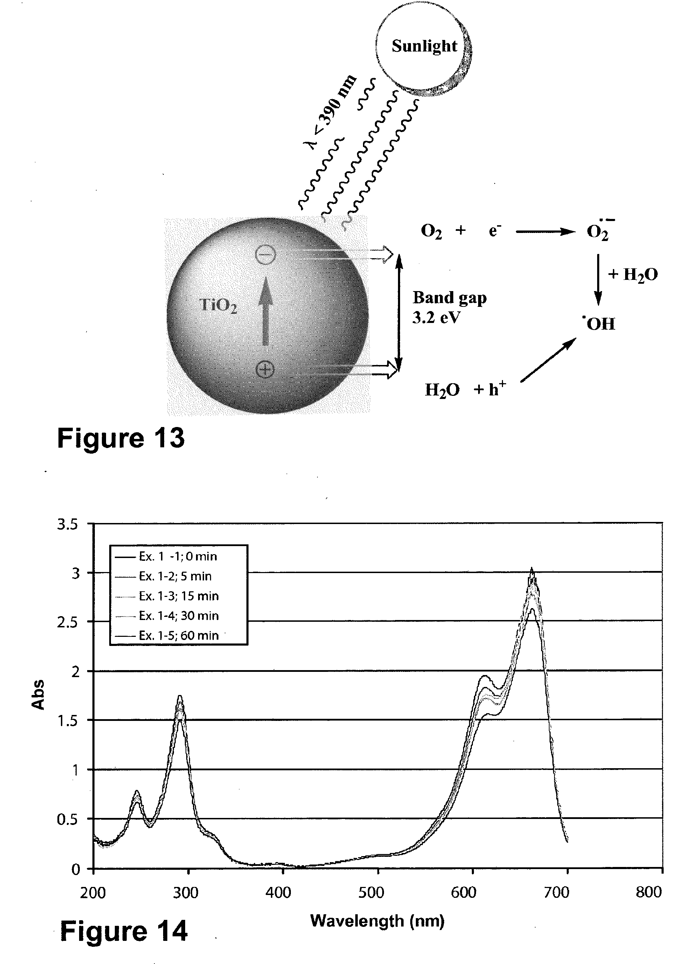

Figure 13 illustrates a photo-catalysis mechanism. Photons are believed to be absorbed by $TiO_2$, and electron/hole pairs are generated. The surface of a photocatalyst contains water, which may be referred to as "absorbed water." (In this case, the water remains on the surface and is not believed to enter the photocatalyst.) When contacting with absorbed water, this water believe to be oxidized by positive holes to form hydroxyl radicals (•OH), which have strong oxidative decomposing power. These free radicals may be able to oxide organic compounds to water and carbon dioxide. On the other hand, the reduction of oxygen by obtaining one electron excited in the conduction band results in the generation of superoxide anions ($•O_2^-$). Superoxided anions may react with water to generate free radical •OH or attach to the intermediate product in the oxidative reaction, forming peroxide, which can further develop free radicals and decompose organic compounds.

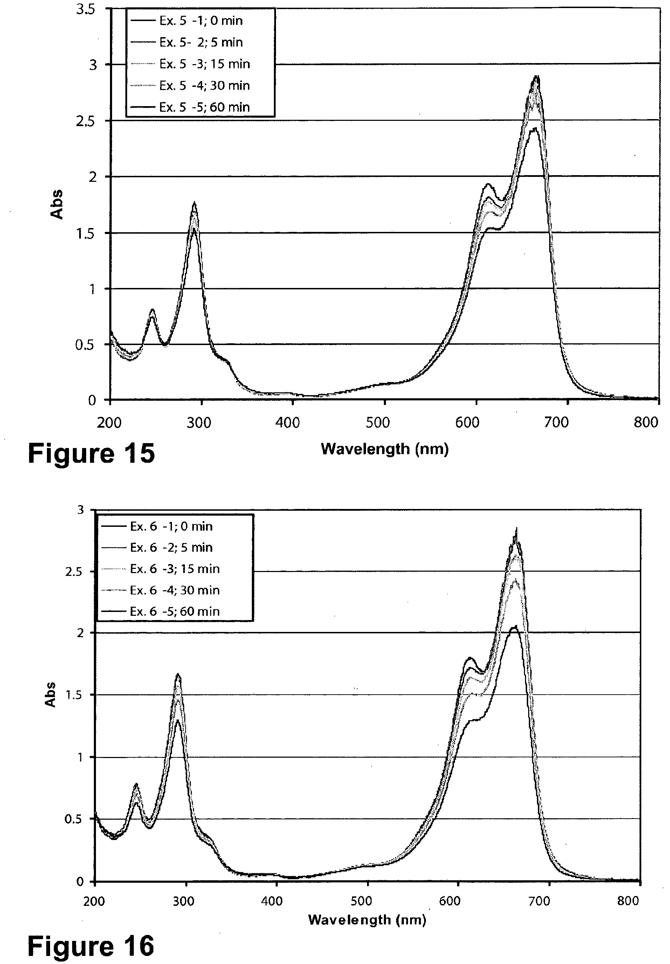

The self-cleaning AR coated glasses were immersed in methylene blue solution with a concentration of $2 \times 10^{-5}$ mol/l, and absorption of methylene blue was monitored by UV-vis spectroscopy at different UV irradiation times. Figures 14, 15, and 16 show the profiles of UV-vis spectroscopes of methylene blue solution immersed with various self-cleaning AR coated glasses. These figures show that all self-cleaning AR coated glasses can degrade methylene blue as the absorption of methylene blue decreased with increasing UV irradiation time. More decay of methylene blue can be found with self-cleaning AR coated glass with more $TiO_2$ on coating layer.

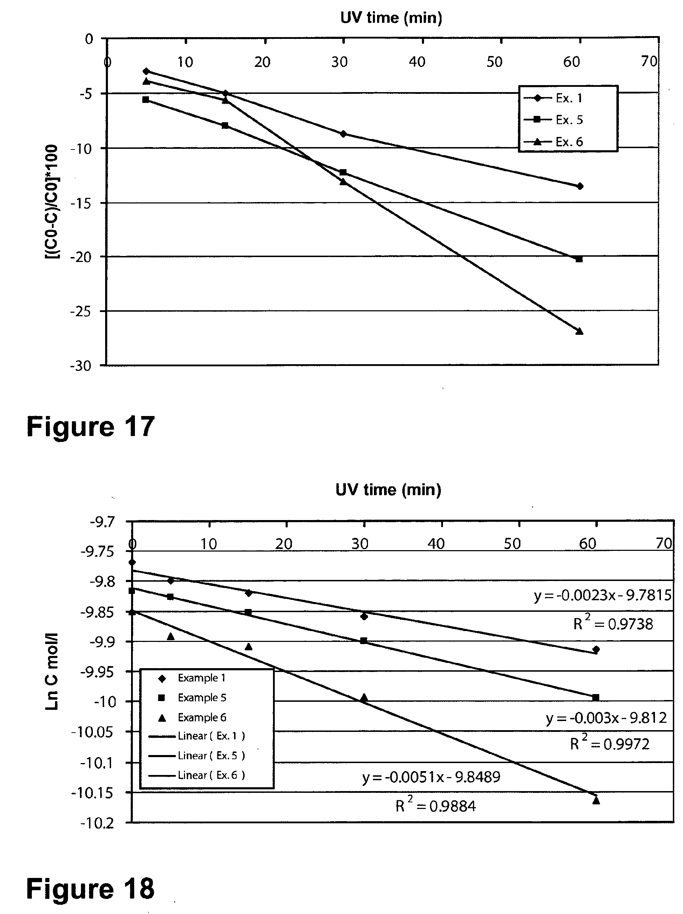

Figure 17 shows the relationship between decomposition of methylene blue and UV time.

Degradation of methylene blue is observed with all self-cleaning AR coated glasses. The decomposition rate of methylene blue is increased with more $TiO_2$ on coating layer.

It is believed that photocatalysis experiments involving titanium thin films follows the Langmuir-Hinshelwood model, where the reaction rate, R is proportional to the surface coverage, Sc as described in Eq. (10)

$$S_c = n_m \frac{bC}{1+bC} \qquad (10)$$

where nm is the number of moles of adsorbate corresponding to a monolayer and b is a parameter that is independent of pressure, P but depend upon T. The value of b depends upon the strength of the adsorbent-adsorbate interaction. Based on the first-order kinetics, the reaction rate R can be written as:

$$R = -\frac{dC}{dt} = k_d S_c = k_d n_m \frac{bC}{1+bC} \qquad (11)$$

Normally, the bC << 1, therefore Eq. (ii) can be rewritten as follows:

$$-\frac{dC}{dt} = k_d n_m b C = k_{app} C$$

$$k_{app} = k_d n_m b$$

(12)

where $k_{app}$ is an apparent first order reaction rate constant. After integration of Eq. (12) and with initial concentration as Co, Eq. (12) can be rewritten as follows:

$$-\ln\frac{C}{C_0} = k_{app} t$$

(13)

Figure 18 indicates that the decomposition of methylene blue follows the first-order reaction rate because of the good linear relationship between ln C and UV irradiation time. From the slope of a straight line, $k_{app}$ can be calculated as shown in Table 7. It is clear that the value of $k_{app}$ increases with the increasing of molar ratio of $TiO_2$ to $SiO_2$ on coating layer, which indicates that a major contribution of the decomposing of methylene blue is from $TiO_2$ nanoparticles.

**Table 7. Apparent reaction rate constant, $k_{app}$ from different self-cleaning AR coated glasses**

| ID | molar ratio ($TiO_2/SiO_2$) | $k_{app}$ min$^{-1}$ |
|---|---|---|
| Example 1 | 0.150 | 0.0023 |
| Example 5 | 0.280 | 0.003 |
| Example 6 | 0.841 | 0.0051 |

*Water contact angle*

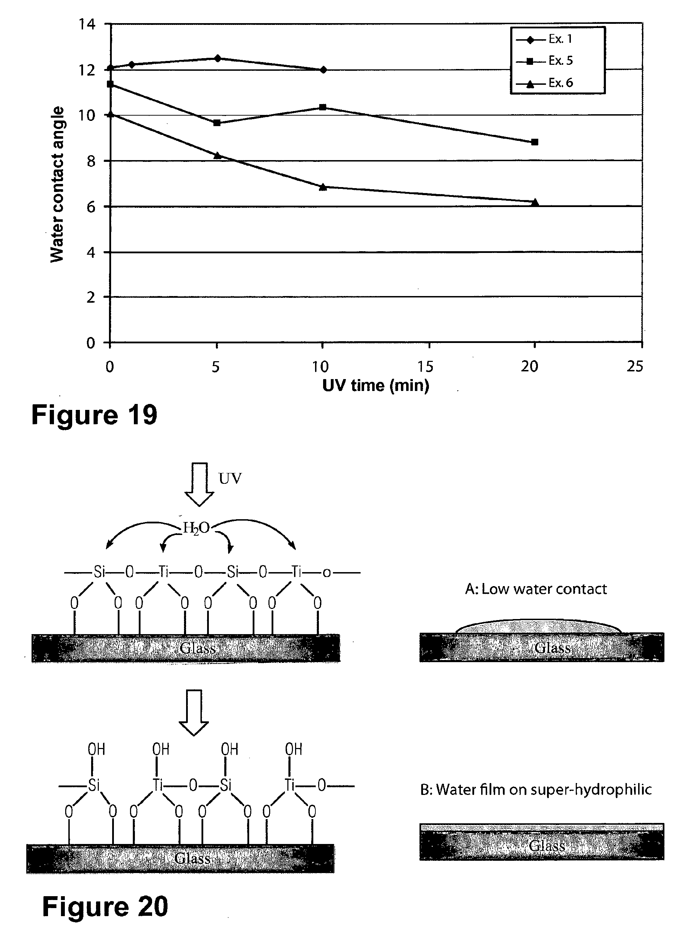

Figure 19 illustrates the change of water contact angle of self-cleaning AR coated glass with UV irradiation time. It is clear that water contact angle decreased with increasing UV irradiation time, and lower contact angle can be observed for AR coated glass with more $TiO_2$ nanoparticle on the coating layer. Water contact angle is reduced from 10 degree to 6 degree with self-cleaning AR coated glass of 2.79 wt% $TiO_2$ in the coating layer. It appears that water contact angle before UV irradiation is the order with increased $TiO_2$ amount of coating layer. This phenomenon may be attributed to photocatalysis of $TiO_2$ by sunlight.

When the surface of photocatalytic film is exposed to UV light, the contact angle of the photocatalytic surface with water may be reduced gradually as more hydroxyl group is produced on surface. After enough exposure to light, the surface may reach a super-hydrophilic state. In other words, the surface may not repel water at all, so water cannot exist in the shape of a drop, but spreads flatly on the surface of the substrate, e.g., as illustrated in Figure 20.

*Repeatability test*

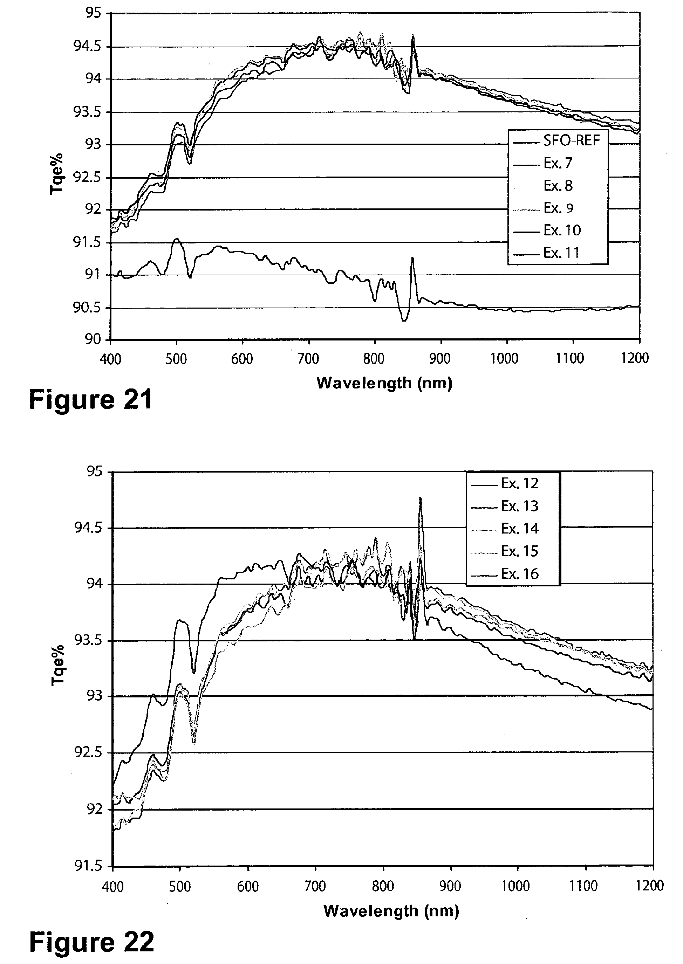

Table 8 lists Tqe% and Tqe% gain of self-cleaning AR coated glass during the repeatability test. Two groups of self-cleaning AR coated glass are prepared according to weight percentage of $TiO_2$ on coating layer. One was 0.699 wt.% of $TiO_2$, and another was 1.397 wt.% of $TiO_2$. Five samples of AR coated glass were prepared in each group. As listed in Table 8, for the first group, average Tqe% gain is 2.85% with standard variation as 0.028, and for the second group, average Tqe% gain as 2.67% with standard variation as 0.04. Figures 21 and 22 are the transmittance curves of self-cleaning AR coated glass presented in Table 8, respectively.

**Table 8. Tqe% gain of self cleaning AR coated glass during repeatability test**

| ID | Glass | TiO2% | Peak (nm) | Tqe% raw glass | Tqe% AR | Tqe% gain | Ave. | STD |
|---|---|---|---|---|---|---|---|---|
| Example 7 | SFO/Sn | 0.699 | 780 | 90.836 | 93.654 | 2.819 | | |
| Example 8 | SFO/Sn | 0.699 | 755 | 90.836 | 93.715 | 2.880 | | |
| Example 9 | SFO/Sn | 0.699 | 810 | 90.836 | 93.705 | 2.869 | | |
| Example 10 | SFO/Sn | 0.699 | 755 | 90.836 | 93.654 | 2.818 | | |
| Example 11 | SFO/Sn | 0.699 | 715 | 90.836 | 93.686 | 2.850 | 2.847 | 0.028 |

(continued)

| ID | Glass | TiO2% | Peak (nm) | Tqe% raw glass | Tqe% AR | Tqe% gain | Ave. | STD |
|---|---|---|---|---|---|---|---|---|
| Example 12 | SFO/Sn | 1.397 | 755 | 90.836 | 93.465 | 2.630 | | |
| Example 13 | SFO/Sn | 1.397 | 790 | 90.836 | 93.534 | 2.699 | | |
| Example 14 | SFO/Sn | 1.397 | 805 | 90.836 | 93.538 | 2.702 | | |
| Example 15 | SFO/Sn | 1.397 | 785 | 90.836 | 93.454 | 2.618 | | |
| Example 16 | SFO/Sn | 1.397 | 680 | 90.836 | 93.523 | 2.688 | 2.667 | 0.040 |

SFO glass and coated side is Tin side.

*Durability test*

Partial durability tests were evaluated, and the results are summarized in Table 9. Two self-cleaning AR coated glasses with percentage of $TiO_2$ as 0.699% and 1.397% were evaluated. All self-cleaning AR coated glasses passed water boiling, NaOH (0.1N), Tape pull and crockmeter tests. More durable self-cleaning AR coated glass might be attributed to the cross-linked network generated by metal alkoxides of TBO and TEOS with four functional groups and fast hydrolysis and condensation rates.

**Table 9. Durability test of self-cleaning AR coated glass**

| ID | Glass | Test item | $TiO_2$% | Peak (nm) | Tqe% pre | Tqe% post | Tqe% gain |
|---|---|---|---|---|---|---|---|
| Example 7 | SFO/Sn | NaOH, 0.1 N | 0.699 | 765 | 93.654 | 93.660 | 0.005 |
| Example 8 | SFO/Sn | Water boiling | 0.699 | 720 | 93.715 | 93.687 | -0.028 |
| Example 9 | SFO/Sn | Tape pull | 0.699 | 790 | 93.705 | 93.528 | -0.177 |
| Example 10 | SFO/Sn | Crockmeter | 0.699 | 765 | 93.654 | 92.885 | -0.768 |
| Example 12 | SFO/Sn | NaOH, 0.1 N | 1.397 | 765 | 93.465 | 93.511 | 0.046 |
| Example 13 | SFO/Sn | Water boiling | 1.397 | 795 | 93.534 | 92.975 | -0.559 |
| Example 14 | SFO/Sn | Tape pull | 1.397 | 795 | 93.538 | 93.640 | 0.102 |
| Example 15 | SFO/Sn | Crockmeter | 1.397 | 810 | 93.454 | 92.933 | -0.521 |

*AFM images of self-cleaning AR coated glass*

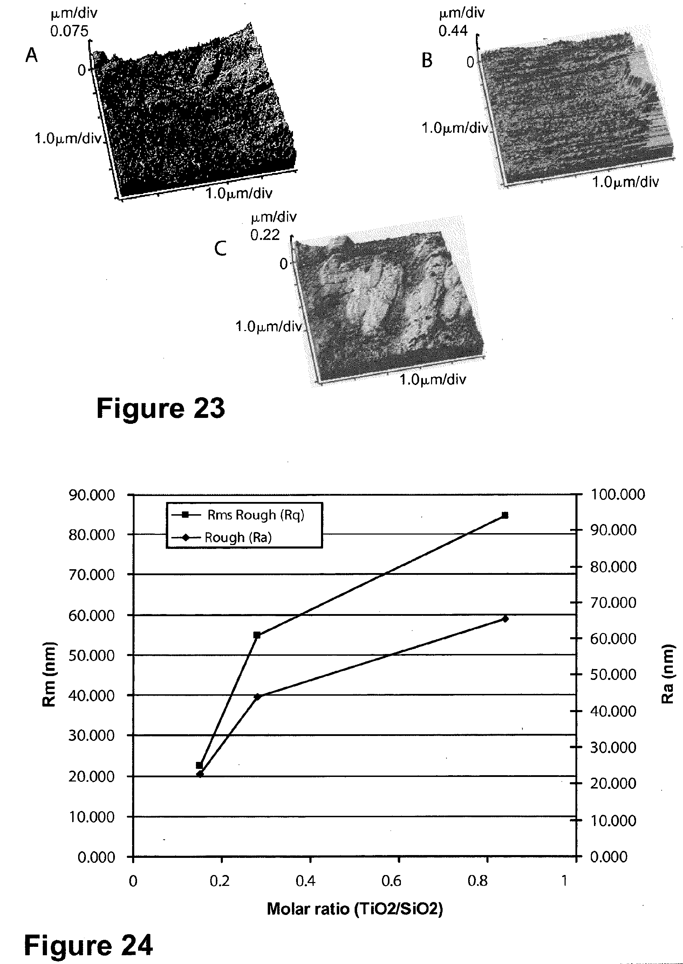

Figure 23 shows the morphology of self-cleaning AR coated glass measured by AFM. The statistic roughness of self-cleaning AR coated glass is summarized in Table 10. It is believed that the surface roughness increased with increasing of $TiO_2$ amount on coating layer. Figure 24 shows the relationship between Ra (Rm) and molar ratio of $TiO_2$ to $SiO_2$.

**Table 10. Roughness of self-cleaning AR coated glass**

| ID | Molar ratio ($TiO_2/SiO_2$) | Ra, nm | STD | Rm, nm | STD |
|---|---|---|---|---|---|
| Example 1 | 0.15 | 22.533 | 2.850 | 22.533 | 2.850 |
| Example 5 | 0.28 | 43.964 | 9.159 | 54.857 | 11.739 |
| Example 6 | 0.841 | 65.410 | 36.031 | 84.609 | 52.541 |

*Optical thickness and refractive index*

Table 11 lists the optical thickness and refractive index of self-cleaning AR coated glass measured with an Ellipsometer. The optical thickness decreased, but the refractive index increased with increasing of molar ratio of $TiO_2$ to $SiO_2$ on coating layer. The increasing of refractive index might be attributed to the fact of higher refractive index of

TiO$_2$. The decrease of thickness might be the reason there is a denser coating layer, instead of a porous structure when more TiO$_2$ is presented in the coating layer.

**Table 11. Optical thickness and refractive index of self-cleaning AR coated glass**

| ID | Molar ratio (TiO$_2$/SiO$_2$) | MSE | thickness (nm) | R.I (550 nm) |
|---|---|---|---|---|
| Example 1 | 0.150 | 9.84 | 162.48 | 1.2742 |
| Example 5 | 0.280 | 8.73 | 154.42 | 1.3076 |
| Example 6 | 0.841 | 2.76 | 82.38 | 1.3826 |

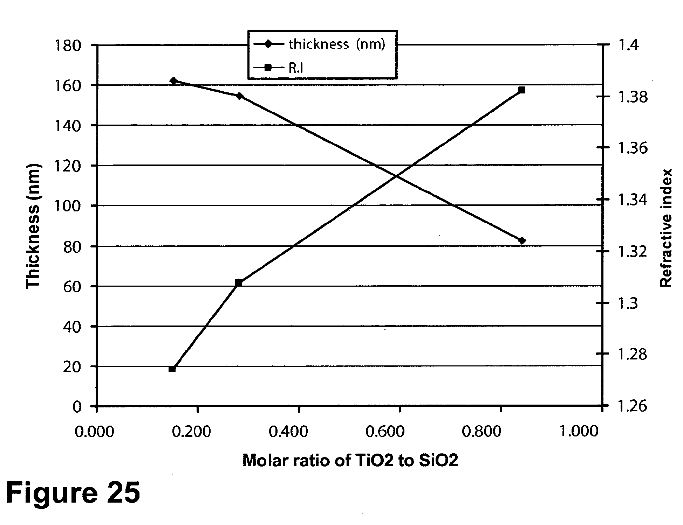

Figure 25 shows the relationship between thickness, refractive index, and molar ratio of TiO$_2$ to SiO$_2$.

With sols containing silica and titanium nanoparticles, and TEOS and TBO as a binder, the self-cleaning glass may be prepared by a sol-gel process. Higher transmittance with Tqe% gain as high as 2.5 -2.8% may be achieved in some cases. Self-cleaning performance may be evaluated by degradation of methylene blue and a change of water contact angle with UV irradiation. More than 30% of decrease on methylene blue concentration after 60 min of UV irradiation is believed to confirm the self-cleaning function. A decrease of water contact angle may also be achieved on a self-cleaning AR coated glass with UV irradiation. The increase of TiO$_2$ amount on coating layer may effectively increase self-cleaning performance, but a function of anti-reflection decreases. Certain example aspects of certain example embodiments relate to a self-cleaning AR coated glasses that can exhibit good durability, e.g., because they may pass water boiling, NaOH solution, tape pull and crockmeter tests.

The measurement of optical thickness and refractive index suggests the amount of TiO$_2$ may impact the structure of coating layer. A thinner coating layer with a higher refractive index may be expected when more TiO$_2$ is on coating layer. The roughness of self-cleaning AR coated glass appears to increase with more TiO$_2$ on coating layer.

As will be appreciated from the above, photocatalytic anatase TiO$_2$ may be provided in a matrix deposited in accordance with a sol gel technique. The incorporation of TiO$_2$ ordinary would be expected to increase the index of refraction, given the high index expected from TiO$_2$ based layers. However, certain example embodiments surprisingly and unexpectedly retain AR functionality, despite the introduction of a high index material. It is noted that durability is excellent, likely because of the composite material involved in certain example embodiments. For instance, TiO$_2$ and/or other elements may be provided at locations in the matrix that otherwise would be weak points

As used herein, the terms "on," "supported by," and the like should not be interpreted to mean that two elements are directly adjacent to one another unless explicitly stated. In other words, a first layer may be said to be "on" or "supported by" a second layer, even if there are one or more layers there between.

It will be appreciated that the nanoparticles of certain example embodiments will not be perfectly spherical in all scenarios. Thus, certain example embodiments report sizes as a diameter or major distance across the particle, which may be spherical, substantially spherical, slightly oblong, etc. In addition, although certain sizes are recited herein, it will be appreciated that those sizes are size distributions. In this sense, a "batch" of nanoparticles of a "size" may include nanoparticles sizes that are the same size or similar to the "size" reported. Preferably, the distribution will differ in size from what is reported by no more than 10%, more preferably no more than 5%, and still more preferably by no more than 3%.

In certain example embodiments, a method of making a coated article comprising an anti-reflection coating supported by a glass substrate is provided. At least a portion of a solution comprising (i) a metal alkoxide, (ii) a transition metal alkoxide, and (iii) titanium dioxide nanoparticles, is desposited on the glass substrate to form a substantially uniform coating. Said coating is cured and/or allowed to cure, in making the anti-reflection coating.

In addition to the features of the previous paragraph, in certain example embodiments, the metal alkoxide may comprise tetraethyl orthosilicate.

In addition to the features of either of the two previous paragraphs, in certain example embodiments, the transition metal alkoxide may comprise titanium n-butoxide.

In addition to the features of any of the three previous paragraphs, in certain example embodiments, the solution may comprise tetraethyl orthosilicates and titanium n-butoxide.

In addition to the features of any of the four previous paragraphs, in certain example embodiments, the titanium dioxide nanoparticles may have a major distance or diameter less than 100 nm, more preferably less than 75 nm, still more preferably less than 50 nm, and sometimes less than 10 nm.

In addition to the features of any of the five previous paragraphs, in certain example embodiments, the solution may contain titania and silica, and the solution may have a molar ratio of titania to silica in the range from 0.15 to 0.84.

In addition to the features of any of the six previous paragraphs, in certain example embodiments, the glass substrate may comprise solar float glass.

In addition to the features of any of the seven previous paragraphs, in certain example embodiments, the solution may be applied directly to the substrate using a spin coating method.

In addition to the features of any of the eight previous paragraphs, in certain example embodiments, the anti-reflection coating may have a refractive index less than 1.5.

In certain example embodiments, a coated article comprising an anti-reflection coating supported by a glass substrate is provided. The anti-reflection coating comprises a reaction product of a hydrolysis or a condensation reaction of a metal alkoxide and a transition metal alkoxide; and a plurality of anatase $TiO_2$ nanoparticles having a major distance or diameter less than 100 nm, suspended in a matrix formed from the reaction product. The anti-reflection coating has a refractive index less than 1.5.

In addition to the features of the previous paragraph, in certain example embodiments, the metal alkoxide may comprise tetraethyl orthosilicate.

In addition to the features of either of the two previous paragraphs, in certain example embodiments, the transition metal alkoxide may comprise titanium n-butoxide.

In addition to the features of any of the three previous paragraphs, in certain example embodiments, the solution may comprise tetraethyl orthosilicates and titanium n-butoxide.

In addition to the features of any of the four previous paragraphs, in certain example embodiments, the titanium dioxide nanoparticles may have a major distance or diameter less than 100 nm, more preferably less than 50 nm, and sometimes less than 10 nm.

In addition to the features of any of the five previous paragraphs, in certain example embodiments, the coating may contain titania and silica, and the coating may have a molar ratio of titania to silica in the range from 0.15 to 0.84.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

In the following, further embodiments are described to facilitate the understanding of the invention:

1. A method of making a coated article comprising an anti-reflection coating supported by a glass substrate, the method comprising:

depositing on the glass substrate at least a portion of a solution comprising (i) a metal alkoxide, (ii) a transition metal alkoxide, and (iii) titanium dioxide nanoparticles, to form a substantially uniform coating; and
curing said coating and/or allowing said coating to cure, in making the anti-reflection coating.

2. The method according to embodiment 1, wherein the metal alkoxide comprises tetraethyl orthosilicate.

3. The method according to any preceding embodiment, wherein the transition metal alkoxide comprises titanium n-butoxide.

4. The method according to any preceding embodiment, wherein the solution comprises tetraethyl orthosilicates and titanium n-butoxide.

5. The method according to any preceding embodiment, wherein the titanium dioxide nanoparticles have a major distance or diameter less than 100 nm.

6. The method according to any preceding embodiment, wherein the titanium dioxide nanoparticles have a major distance or diameter less than 75 nm.

7. The method according to any preceding embodiment, wherein the titanium dioxide nanoparticles have a major distance or diameter less than 50 nm.

8. The method according to any preceding embodiment, wherein the titanium dioxide nanoparticles have a major distance or diameter less than 10 nm.

9. The method according to any preceding embodiment, wherein the solution contains titania and silica, and wherein the solution has a molar ratio of titania to silica in the range from 0.15 to 0.84.

10. A method according to any preceding embodiment, wherein the glass substrate comprises solar float glass.

11. A method according to any preceding embodiment, wherein the solution is applied directly to the substrate using a spin coating method.

12. A method according to any preceding embodiment, wherein the anti-reflection coating has a refractive index less than 1.5.

13. A coated article comprising an anti-reflection coating supported by a glass substrate, the anti-reflection coating comprising:

a reaction product of a hydrolysis or a condensation reaction of a metal alkoxide and a transition metal alkoxide; and
a plurality of anatase $TiO_2$ nanoparticles having a major distance or diameter less than 100 nm, suspended in a matrix formed from the reaction product,
wherein the anti-reflection coating has a refractive index less than 1.5.

14. A coated article according to embodiment 13, wherein the metal alkoxide comprises tetraethyl orthosilicate.

15. A coated article according to any of embodiments 13-14, wherein the transition metal alkoxide comprises titanium n-butoxide.

16. A coated article according to any of embodiments 13-15, wherein the solution comprises tetraethyl orthosilicates and titanium n-butoxide.

17. A coated article according to any of embodiments 13-16, wherein the titanium dioxide nanoparticles have a major distance or diameter less than 100 nm.

18. A coated article according to any of embodiments 13-17, wherein the titanium dioxide nanoparticles have a major distance or diameter less than 50 nm.

19. A coated article according to any of embodiments 13-18, wherein the titanium dioxide nanoparticles have a major distance or diameter less than 10 nm.

20. A coated article according to any of embodiments 13-19, wherein the coating contains titania and silica, and wherein the coating has a molar ratio of titania to silica in the range from 0.15 to 0.84.

**Claims**

1. A method of making a coated article comprising an anti-reflection coating supported by a glass substrate, the method comprising:

depositing on the glass substrate at least a portion of a solution comprising (i) a metal alkoxide comprising tetraethyl orthosilicate, (ii) a transition metal alkoxide comprising titanium n-butoxide, and (iii) titanium dioxide nanoparticles, to form a substantially uniform coating; and
curing said coating and/or allowing said coating to cure, in making the anti-reflection coating.

2. The method according to claim 1, wherein the titanium dioxide nanoparticles have a major distance or diameter less than 100 nm, preferably a major distance or diameter less than 75 nm, more preferred a major distance or diameter less than 50 nm and most preferred a major distance or diameter less than 10 nm.

3. The method according to any preceding claim, wherein the solution has a molar ratio of titania to silica in the range from 0.15 to 0.84.

4. A method according to any preceding claim, wherein the glass substrate comprises solar float glass.

5. A method according to any preceding claim, wherein the solution is applied directly to the substrate using a spin coating method.

**6.** A method according to any preceding claim, wherein the anti-reflection coating has a refractive index less than 1.5.

**7.** A coated article comprising an anti-reflection coating supported by a glass substrate, the anti-reflection coating comprising:

a reaction product of a hydrolysis or a condensation reaction of a metal alkoxide comprising tetraethyl orthosilicate and a transition metal alkoxide comprising titanium n-butoxide; and
a plurality of anatase $TiO_2$ nanoparticles having a major distance or
diameter less than 100 nm, suspended in a matrix formed from the reaction product,
wherein the anti-reflection coating has a refractive index less than 1.5.

**8.** A coated article according to claim 6, wherein the titanium dioxide nanoparticles have a major distance or diameter less than 100 nm, preferably a major distance or diameter less than 50 nm, more preferred a major distance or diameter less than 10 nm.

**9.** A coated article according to any of claims 6-7, wherein the coating has a molar ratio of titania to silica in the range from 0.15 to 0.84.

**Patentansprüche**

**1.** Verfahren zum Herstellen eines beschichteten Gegenstandes umfassend eine Antireflexbeschichtung, welche durch ein Glassubstrat gestützt wird, das Verfahren aufweisend:

Ablagern, auf das Glassubstrat, zumindest einen Teil einer Lösung umfassend (i) ein Metallalkoxid umfassend Tetraethylorthosilikat, (ii) ein Übergangsmetallalkoxid umfassend Titan-n-butoxid, und (iii) Titandioxid-Nanopartikel, um eine im Wesentlichen gleichmäßige Schicht zu bilden; und
Härten der Schicht und/oder es der Schicht ermöglichen zu härten bei der Herstellung der Antireflexbeschichtung.

**2.** Das Verfahren nach Anspruch 1, wobei die Titandioxid-Nanopartikel einen Hauptabstand oder Durchmesser von weniger als 100 nm, vorzugsweise einen Hauptabstand oder Durchmesser von weniger als 75 nm, weiter vorzugsweise einen Hauptabstand oder Durchmesser von weniger als 50 nm und am meisten vorzugsweise einen Hauptabstand oder Durchmesser von weniger als 10 nm haben.

**3.** Das Verfahren nach einem der vorangegangenen Ansprüche, wobei die Lösung ein Molverhältnis von Titan zu Siliziumdioxid in dem Bereich von 0.15 bis 0.84 hat.

**4.** Verfahren nach einem der vorangegangenen Ansprüche, wobei das Glassubstrat Solar-Floatglas umfasst.

**5.** Verfahren nach einem der vorangegangenen Ansprüche, wobei die Lösung direkt auf das Substrat unter Verwendung eines Rotationsbeschichtungsverfahrens aufgebracht wird.

**6.** Verfahren nach einem der vorangegangenen Ansprüche, wobei die Antireflexbeschichtung einen Brechungsindex von weniger als 1.5 hat.

**7.** Beschichteter Gegenstand umfassend eine Antireflexbeschichtung, welche durch ein Glassubstrat gestützt wird, wobei die Antireflexbeschichtung aufweist:

ein Reaktionsprodukt einer Hydrolyse oder einer Kondensationsreaktion eines Metallalkoxids umfassend Tetraethylorthosilikat und eines Übergangsmetallalkoxids umfassend Titan-n-butoxid; und
eine Vielzahl von Anatas-Ti02-Nanopartikel mit einem Hauptabstand oder Durchmesser von weniger als 100 nm, welche in einer Matrix aus dem Reaktionsprodukt suspendiert sind,
wobei die Antireflexbeschichtung einen Brechungsindex von weniger als 1.5 hat.

**8.** Beschichteter Gegenstand nach Anspruch 6, wobei die Titaniumdioxid-Nanopartikel einen Hauptabstand oder Durchmesser von weniger als 100 nm, weiter vorzugsweise einen Hauptabstand oder Durchmesser von weniger als 50 nm und am meisten vorzugsweise einen Hauptabstand oder Durchmesser von weniger als 10 nm haben.

**9.** Beschichteter Gegenstand nach einem der Ansprüche 6-7, wobei die Beschichtung ein Molverhältnis von Titan zu Siliziumdioxid in dem Bereich von 0.15 bis 0.84 hat.

**Revendications**

**1.** Procédé de fabrication d'un article revêtu comprenant un revêtement antireflet supporté par un substrat de verre, le procédé comprenant :

le dépôt sur le substrat de verre d'au moins une partie d'une solution comprenant (i) un alcoxyde de métal comprenant de l'orthosilicate de tétraéthyle, (ii) un alcoxyde de métal de transition comprenant du n-butoxyde de titane, et (iii) des nanoparticules de dioxyde de titane, pour former un revêtement sensiblement uniforme ; et le durcissement dudit revêtement et/ou le fait de laisser ledit revêtement durcir, pour fabriquer le revêtement antireflet.

**2.** Procédé selon la revendication 1, dans lequel les nanoparticules de dioxyde de titane présentent une distance majeure ou un diamètre majeur inférieur à 100 nm, de préférence une distance majeure ou un diamètre majeur inférieur à 75 nm, de manière davantage préférée une distance majeure ou un diamètre majeur inférieur à 50 nm et de manière préférée entre toutes une distance majeure ou un diamètre majeur inférieur à 10 nm.

**3.** Procédé selon l'une quelconque des revendications précédentes, dans lequel la solution présente un rapport molaire dioxyde de titane sur silice situé dans la plage allant de 0,15 à 0,84.

**4.** Procédé selon l'une quelconque des revendications précédentes, dans lequel le substrat de verre comprend un verre flotté solaire.

**5.** Procédé selon l'une quelconque des revendications précédentes, dans lequel la solution est appliquée directement sur le substrat en utilisant un procédé de revêtement par centrifugation.

**6.** Procédé selon l'une quelconque des revendications précédentes, dans lequel le revêtement antireflet possède un indice de réfraction inférieur à 1,5.

**7.** Article revêtu comprenant un revêtement antireflet supporté par un substrat de verre, le revêtement antireflet comprenant:

un produit réactionnel d'une hydrolyse ou d'une réaction de condensation d'un alcoxyde de métal comprenant de l'orthosilicate de tétraéthyle et d'un alcoxyde de métal de transition comprenant du n-butoxyde de titane ; et une pluralité de nanoparticules de $TiO_2$ anatase ayant une distance majeure ou un diamètre majeur inférieur à 100 nm, en suspension dans une matrice formée à partir du produit réactionnel, dans lequel le revêtement antireflet possède un indice de réfraction inférieur à 1,5.

**8.** Article revêtu selon la revendication 6, dans lequel les nanoparticules de dioxyde de titane présentent une distance majeure ou un diamètre majeur inférieur à 100 nm, de préférence une distance majeure ou un diamètre majeur inférieur à 50 nm, de manière davantage préférée une distance majeure ou un diamètre majeur inférieur à 10 nm.

**9.** Article revêtu selon l'une quelconque des revendications 6 à 7, dans lequel le revêtement présente un rapport molaire dioxyde de titane sur silice situé dans la plage allant de 0,15 à 0,84.

# Figure 1

# Figure 2

**Figure 3**

**Figure 4**

**Figure 5**

TiO2 nanoparticle

+ H₂O

## Figure 6

R = CH₃CH₂

intermediate

hydrolyzed TEOS

hydrolysis

esterification

+ ROH

+ H⁺

## Figure 7

alcohol condensation

water condnesation

# Figure 8

elongated SiO2 nanoparticle

# Figure 9

Crosslinked network

Coated layer

Glass

# Figure 10

EP 2 749 608 B1

# Figure 11

# Figure 12

24

$$O_2 + e^- \longrightarrow O_2^{\cdot-}$$

$$\downarrow + H_2O$$

Band gap
3.2 eV

$$^{\cdot}OH$$

$$H_2O + h^+ \nearrow$$

**Figure 13**

Legend:
- Ex. 1 -1; 0 min
- Ex. 1-2; 5 min
- Ex. 1-3; 15 min
- Ex. 1-4; 30 min
- Ex. 1-5; 60 min

Wavelength (nm)

**Figure 14**

**Figure 15**

**Figure 16**

**Figure 17**

**Figure 18**

# Figure 19

A: Low water contact

B: Water film on super-hydrophilic

# Figure 20

**Figure 21**

**Figure 22**

**Figure 23**

**Figure 24**

**Figure 25**

EP 2 749 608 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4510344 A
- US 4806436 A
- US 6506622 B
- US 5977477 A
- JP 7122764 A
- WO 2010069997 A1
- US 20100003498 A1
- EP 1475414 A1
- US 7700870 B

- US 7557053 B
- US 5030594 A
- US 20060169316 A
- US 20060249199 A
- US 20070215205 A
- US 20090223252 A
- US 20100122728 A
- US 20090217978 A
- US 20100255980 A